(19) Europäisches Patentamt
European Patent Office
Office européen des brevets

(11) EP 3 757 170 B1

(12) EUROPEAN PATENT SPECIFICATION

(45) Date of publication and mention of the grant of the patent:
**10.09.2025 Bulletin 2025/37**

(21) Application number: **19756566.6**

(22) Date of filing: **13.02.2019**

(51) International Patent Classification (IPC):
***C08L 101/08*** (2006.01) ***C08G 18/02*** (2006.01)
***C08G 73/00*** (2006.01) ***C08K 5/057*** (2006.01)
***C08K 5/098*** (2006.01) ***C08L 101/06*** (2006.01)
***C08K 5/56*** (2006.01)

(52) Cooperative Patent Classification (CPC):
(C-Sets available)
**C09D 175/04; C08G 18/025; C08G 18/165; C08G 18/168; C08G 18/2063; C08G 18/222; C08G 18/225; C08G 18/242; C08G 18/246; C08G 18/283; C08G 18/285; C08G 18/42; C08G 18/6216; C08G 18/706; C08G 18/8064;**
(Cont.)

(86) International application number:
**PCT/JP2019/005154**

(87) International publication number:
**WO 2019/163613 (29.08.2019 Gazette 2019/35)**

# (54) RESIN COMPOSITION, RESIN MATERIAL AND RESIN CROSSLINKED BODY

HARZZUSAMMENSETZUNG, HARZMATERIAL UND VERNETZTER HARZKÖRPER

COMPOSITION DE RÉSINE, MATÉRIAU DE RÉSINE, ET CORPS RÉTICULÉ DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2018 JP 2018031212**
**04.09.2018 JP 2018165359**

(43) Date of publication of application:
**30.12.2020 Bulletin 2020/53**

(73) Proprietor: **Nisshinbo Chemical Inc.**
**Tokyo 103-8650 (JP)**

(72) Inventors:
- **NAKASHIMA, Shinichi**
  **Chiba-shi, Chiba 267-0056 (JP)**
- **YANAGISAWA, Kenichi**
  **Chiba-shi, Chiba 267-0056 (JP)**
- **KURAMOCHI, Masako**
  **Chiba-shi, Chiba 267-0056 (JP)**
- **TANAZAWA, Sho-go**
  **Chiba-shi, Chiba 267-0056 (JP)**

(74) Representative: **Steffan & Kiehne Patentanwälte PartG mbB**
**Patentanwälte**
**Postfach 10 40 09**
**40031 Düsseldorf (DE)**

(56) References cited:
**WO-A1-2007/111059**
**JP-A- 2000 035 693**
**JP-A- 2015 163 669**
**JP-A- 2017 031 301**
**JP-A- 2017 119 855**
**JP-A- 2018 065 947**
**JP-A- S5 962 628**
**JP-B1- 5 457 611**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**C08G 18/807; C08L 101/06; C09D 133/066;**
**C09D 167/00; C09D 171/00; C09D 175/06;**
C08G 73/0233; C08G 2150/20

C-Sets
**C08L 101/06, C08K 5/0091, C08K 5/29;**
**C08L 101/06, C08K 5/0091, C08L 79/08;**
**C09D 133/066, C08L 79/08;**
**C09D 167/00, C08L 79/08**

## Description

### Technical Field

The present invention relates to a resin composition comprising a resin having an alcoholic hydroxy group and/or a carboxy group as a crosslinkable group and a resin crosslinked body that is a reaction product of the resin composition.

### Background Art

In various applications, such as paints, inks, fiber processing agents, adhesives, coating agents, and molded products, resins having a hydrophilic group, such as a hydroxy group and a carboxy group, are widely used. From the viewpoint of improving various properties, such as hydrolysis resistance, durability, and strength, such a resin may be crosslinked with a crosslinking agent by utilizing the hydrophilic group as a crosslinkable group.

As the crosslinking agent, a polycarbodiimide compound and a polyoxazoline compound are known. For example, PTLs 1 and 2 describe that a crosslinking reaction by a carbodiimide group is promoted by allowing a polycarbodiimide compound to react with a compound having a hydroxy group or a mercapto group in the presence of an alcoholate (alkoxide) of an alkali metal or alkaline earth metal.

Other examples of crosslinkable compositions comprising a resin having at least one group selected from alcoholic hydroxy group and a carboxy group, a polycarbodiimide and a organometallic compound are disclosed in PTL 3, PTL4, and PTL5.

### Citation List

### Patent Literature

PTL 1: JP 9-221532 A
PTL 2: JP 9-216931 A
PTL 3: JP 2015 163669 A
PTL 4: JP 2017 031301 A
PTL 5: JP 5 457611 B1

### Summary of Invention

### Technical Problem

However, a polycarbodiimide compound or a polyoxazoline compound has a low crosslinking reactivity to a resin having an alcoholic hydroxy group as a crosslinkable group, and a sufficient crosslinking reactivity could not be obtained even in the presence of an alkoxide of an alkali metal or alkaline earth metal as described in PTLs 1 and 2.

In particular, a high reaction temperature is needed for the crosslinking reaction when the crosslinkable group is an alcoholic hydroxy group of an aliphatic alcohol, causing a problem of discoloration or thermal decomposition of the resin.

Under these circumstances, the inventors have found that the crosslinking reactivity of a polycarbodiimide compound to an alcoholic hydroxy group as a crosslinkable group is improved by combinedly using the polycarbodiimide compound and a specific organometallic compound, and also found that the same effects are obtained for a polyoxazoline compound.

The inventors have further found that the crosslinking reactivity of the polycarbodiimide compound and the polyoxazoline compound to a carboxy group as a crosslinkable group is improved by combinedly using a specific organometallic organic compound.

The invention has been made on the basis of these findings, and an object of the invention is to provide a resin composition comprising a resin having an alcoholic hydroxy group or a carboxy group as a main crosslinkable group, wherein the resin exhibits excellent crosslinking reactivity with a polycarbodiimide compound even at a low temperature where the resin does not cause discoloration or thermal decomposition; a resin material using the resin component; and a resin crosslinked body that is a reaction product of the resin composition.

Solution to Problem

The present invention is based on a finding that the crosslinking reactivity of a polycarbodiimide compound to an alcoholic hydroxy group or a carboxy group is improved by combinedly using a specific organometallic compound.
Specifically, the present invention provides the resin composition according to claim 1 and according to dependent claims 2 and 3, the resin material according to claim 4, and the resin crosslinked body according to claim 5.

Advantageous Effects of Invention

In accordance with the present invention, a resin composition having excellent crosslinking reactivity to a polycarbodiimide compound is provided. When the resin has an alcoholic hydroxy group as a main crosslinkable group, the crosslinking reaction is promoted even at a low temperature where the resin does not cause discoloration or thermal decomposition. When the resin has a carboxy group as a main crosslinkable group, the crosslinking reaction is promoted even at a temperature as low as about room temperature (25 °C).
Therefore, a resin crosslinked body having a high crosslinking strength is obtained from the resin composition as a reaction product thereof even at a lower reaction temperature than is conventionally employed. The resin composition is suitably used as various resin materials.

Description of Embodiments

The resin composition, the resin material, and the resin crosslinked body of the invention are described below in detail.

Resin Composition

The resin composition of the present invention comprises:

at least one resin (A) comprising at least one selected from an alcoholic hydroxy group and a carboxy group;
at least one crosslinking agent (B) selected from a polycarbodiimide compound; and
an organometallic compound (C), wherein the organometallic compound (C) is at least one selected from:
(C1) as defined in claim 1.

The crosslinking reactivity of a hydrophilic crosslinkable group in the resin (A), i.e., the alcoholic hydroxy group and/or the carboxy group is improved by combinedly using the organometallic compound (C) with the resin (A) and the crosslinking agent (B).

Resin (A)

The resin (A) in the resin composition of the invention is a resin having at least one selected from an alcoholic hydroxy group and a carboxy group. Namely, the resin (A) has an alcoholic hydroxy group and/or a carboxy group as a hydrophilic crosslinkable group.
Although the resin (A) has a hydrophilic group, the resin itself may be hydrophilic or hydrophobic.
In accordance with the invention, a resin composition comprising a resin having an alcoholic hydroxy group as a main crosslinkable group is obtained, which is excellent in the crosslinking reactivity at a low reaction temperature where the resin does not cause discoloration or thermal decomposition. In addition, a resin composition comprising a resin having a carboxy group as a main crosslinkable group is obtained, wherein the crosslinking reaction is further promoted even at room temperature (25°C).
To obtain a resin crosslinked body having a high crosslinking strength, the resin (A) preferably has two or more of an alcoholic hydroxy group and/or a carboxy group in one molecule of the resin.
Examples of the resin (A) include a polyester resin, an acrylic resin, a polyurethane resin, an epoxy resin, a styrene-acrylic resin, a fluorine resin, a phenoxy resin, a polyvinyl alcohol (PVA), an ethylene-vinyl alcohol copolymer resin (EVOH), and a cellulose-based resin. These may be used alone or in combination of two or more.
In view of enhancing the effects of the invention, when the resin (A) contains only the alcoholic hydroxy group as the crosslinkable group, a hydroxyl value of the solid component (resin component) is preferably 5 mg KOH/g or more, more preferably 5 to 300 mg KOH/g, and still more preferably 5 to 250 mg KOH/g.
In addition, from the same viewpoint as mentioned above, when the resin (A) contains only the carboxy group as the crosslinkable group, an acid value of the solid component (resin component) is preferably 5 mg KOH/g or more, more preferably 5 to 150 mg KOH/g, and still more preferably 5 to 100 mg KOH/g.

In addition, from the same viewpoint as mentioned above, when the resin (A) contains both the alcoholic hydroxy group and the carboxy group, a total of a hydroxyl value and an acid value of the solid component (resin component) is preferably 5 mg KOH/g or more, more preferably 5 to 500 mg KOH/g, and still more preferably 5 to 400 mg KOH/g.
The hydroxyl value and the acid value are measured by a method described in JIS K0070:1992.

Crosslinking Agent (B)

As the crosslinking agent (B), at least one compound selected from a polycarbodiimide compound is used.
Although these compound are generally used as a crosslinking agent reactive to a carboxy group, their reactivity to the alcoholic hydroxy group is low. In the invention, the crosslinking reactivity of the alcoholic hydroxy group in the resin is improved by combinedly using the organometallic compound (C) with the crosslinking agent. In addition, the crosslinking reactivity of the carboxy group is also improved.
The content of the crosslinking agent (B) in the resin composition is preferably 0.01 to 10 mol, more preferably 0.1 to 5.0 mol, and still more preferably 0.2 to 3.0 mol based on the total of the carbodiimide group of the polycarbodiimide compound and the oxazoline group of the polyoxazoline compound per one mole of the total of the alcoholic hydroxy group and the carboxy group in the resin (A).
The polycarbodiimide compound means a compound having two or more carbodiimide groups and is obtained by a known decarboxylation condensation of a diisocyanate compound.
The diisocyanate compound is not particularly limited and may be any of a linear or alicyclic aliphatic diisocyanate compound, an aromatic diisocyanate compound, and a heterocyclic diisocyanate compound, and these may be used alone or in combination of two or more. Examples thereof include a linear aliphatic diisocyanate, such as tetramethylene diisocyanate, hexamethylene diisocyanate, dodecamethylene diisocyanate, and 2,2,4-trimethylhexamethylene diisocyanate; an alicyclic diisocyanate, such as 1,4-bis(isocyanatomethyl)cyclohexane, 2,2-bis(4-isocyanatocyclohexyl)propane, isophorone diisocyanate, and dicyclohexylmethane-4,4'-diisocyanate; an aromatic ring-containing aliphatic diisocyanates, such as 1,3-bis(2-isocyanato-2-propyl)benzene; and an aromatic diisocyanate, such as toluene-2,4-diisocyanate, 2,2'-diphenylmethane diisocyanate, 2,4'-diphenylmethane diisocyanate, 4,4'-diphenylmethane diisocyanate, and 2,4,6-triisopropylbenzene-1,3-diyl diisocyanate.
If the polycarbodiimide compound has a terminal isocyanate group, the terminal isocyanate group is preferably blocked by a reaction with a known terminal blocking agent having a substituent reactive with the isocyanate group. Examples of the substituent include a hydroxy group, a carboxy group, an amino group, and an isocyanate group. When used as a crosslinking agent for an aqueous resin, the substituent is preferably hydrophilic. Examples thereof include a polyalkylene glycol monohydrocarbyl ether and preferably a polyalkylene glycol monoalkyl ether, such as polyethylene glycol monomethyl ether and polyethylene glycol monoethyl ether.
As the polycarbodiimide compound, also usable is a commercially available product, for example, "CARBODILITE (registered trademark)" (manufactured by Nisshinbo Chemical Inc.).

Organometallic compound (C)

As the organometallic compound (C), at least one compound selected from the organometallic compound (C1) is used:
(C1) as defined in claim 1.
By using the organometallic compound, the crosslinking reactivity of the crosslinking agent (B) to the crosslinkable group of the resin (A) is improved.
The total content of the organometallic compound (C) in the resin composition is preferably 0.01 to 10.0 parts by mass, more preferably 0.02 to 5.0 parts by mass, and still more preferably 0.02 to 2.0 parts by mass in terms of the amount of metal element based on 100 parts by mass of the total of the solid component (resin component) of the resin (A).
From the viewpoint of improving the crosslinking reactivity of the crosslinking agent (B) to the resin (A), the alkoxide compound, the chelate compound, or the carboxylate compound is used as the organometallic compound (C).
The organometallic compound (C1) is an alkoxide compound represented by any of formulae (1-1) to (1-3):

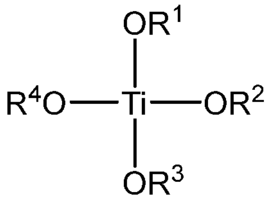 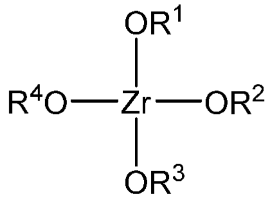 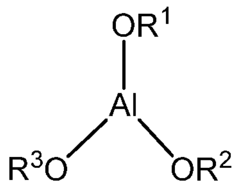

(1-1) (1-2) (1-3)

In formulae (1-1) to (1-3), $R^1$ to $R^4$ are each independently a hydrogen atom, an alkyl group having 1 to 20 carbon atoms, or the following organic group Y. At least one selected from $R^1$ to $R^4$ is preferably the alkyl group or the organic group Y, and more preferably the organic group Y. More preferably, all of $R^1$ to $R^4$ are the organic groups Y.

From the viewpoint of handling properties and easy availability, examples of the alkyl group include a methyl group, an ethyl group, a normal propyl group, an isopropyl group, a normal butyl group, an isobutyl group, a sec-butyl group, a tert-butyl group, an octyl group, and a stearyl group.

The organic group Y is a residue after removing a hydroxy group from a polyalkylene glycol monohydrocarbyl ether represented by formula (1a):

$$R^{11}(OCHR^{12}CH_2)_nOH \qquad (1a)$$

wherein:

- $R^{11}$ is an alkyl group having 1 to 4 carbon atoms or a phenyl group, preferably a methyl group or an ethyl group, and more preferably a methyl group;
- $R^{12}$ is a hydrogen atom or an alkyl group having 1 to 4 carbon atoms, preferably a hydrogen atom or a methyl group, and more preferably a hydrogen atom; and
- n is an integer of 4 to 45, preferably 5 to 30, and more preferably 6 to 15.

From the viewpoint of handling properties and easy availability, the polyalkylene glycol monohydrocarbyl ether is preferably a polyalkylene glycol monoalkyl ether. Examples thereof include polyethylene glycol monomethyl ether and polyethylene glycol monoethyl ether, polyethylene glycol monomethyl ether being particularly suitable.

When two or more selected from $R^1$ to $R^4$ in formula (1-1) or (1-2) or two or more selected from $R^1$ to $R^3$ in formula (1-3) are the organic groups Y, $R^{11}$'s, $R^{12}$'s, and n's may be the same or different.

## Tertiary Amine Compound

From the viewpoint of a good crosslinking reactivity, the resin composition preferably contains a tertiary amine compound.

Examples of the tertiary amine compound include triethylamine, tributylamine, N-methylmorpholine, 1,4-diazabicyclo[2.2.2]octane (triethylenediamine (TEDA)), and N,N'-dimethylpiperazine.

The total content of the tertiary amine compound in the resin composition is preferably 0.001 to 10.0 parts by mass, more preferably 0.005 to 5.0 parts by mass, and still more preferably 0.01 to 2.0 parts by mass based on 100 parts by mass of the total of the solid component (resin component) of the resin (A).

## Other Components

If desired, the resin composition may contain various other additives, such as a solvent, a coloring agent, a filler, a dispersant, a plasticizer, an ultraviolet absorber, and an antioxidant, according to the purpose of use and the application.

The solvent is used, if necessary, to uniformly mix the components in the resin composition. The content thereof is not particularly limited and is appropriately adjusted according to the handling properties at the time of use. The kind of the solvent is appropriately selected according to the kind of the resin and the application of the resin. The solvent may be water, an aqueous solvent, such as ethylene glycol dimethyl ether, or an oily solvent, such as a hydrocarbon and a mineral spirit. Such a solvent is occasionally contained in a commercially available product of resin, crosslinking agent, or organometallic compound.

The content of the additive is appropriately adjusted within a range not adversely affecting the crosslinking reaction of the resin in accordance with the desired physical properties of a resin crosslinked body to be produced. The total content of the additives is preferably 30 parts by mass or less, more preferably 25 parts by mass or less, and still more

preferably 20 parts by mass or less based on 100 parts by mass of the resin (A).

The resin composition is obtained by mixing and stirring the resin (A), the crosslinking agent (B), and the organometallic compound (C). A known method is applicable for the mixing and stirring method. The additive may be further added as an optional component. The addition and mixing order of the components is not particularly limited. As described above, from the viewpoint of uniformly mixing the blending components, a solvent may be appropriately used during the mixing and stirring.

Resin Material

The resin material of the invention is a resin material containing the resin composition. Examples of the resin material include a paint, an ink, an electronic material, an adhesive, a plastic molding material, and a fiber-reinforced plastic material.

When the resin composition is used as such a resin material, various physical properties attributable to the excellent crosslinking properties are exhibited.

In addition to the additives contained in the resin composition, the resin material may contain, if desired, various additives, such as a solvent, a coloring agent, a filler, a dispersant, a plasticizer, an ultraviolet absorber, and an antioxidant, according to the purpose of use and the application. The resin material may further contain a reinforcing fiber, such as a carbon fiber and a glass fiber.

Examples of the paint or ink include an oily paint (ink), a powder paint (ink), and an aqueous paint (ink) for heavy-duty anticorrosion, a ship, a can, an and automobile.

Examples of the electronic material include an electrical insulating material in copper clad laminate, a semiconductor sealing agent, and other various electrical components.

Examples of the adhesive include an adhesive for metal and an adhesive for woodworking.

Examples of the plastic molding material include a film, such as a food packaging film and a lamination film, a sheet, and a molded product, such as a pipe, a toy, a piano keyboard, a stationery, an automobile component, a tableware, an electric machine case, a gear, and an automobile glass substitute. Such a material may be a bioplastic or a biodegradable plastic.

Examples of the fiber-reinforced plastic material include a housing device, a building material, a ship, a yacht, a bathtub, a septic tank, a water storage tank, a pipe, sporting goods, such as a golf shaft and a fishing rod, and an aircraft member.

Resin Crosslinked Body

The resin crosslinked body of the invention is a reaction product of the resin composition.

Resin Crosslinked Body (1)

When the crosslinking agent (B) contains a polycarbodiimide compound, a resin crosslinked body (1) that is a reaction product of the resin composition includes at least one bond selected from an isourea bond, a urea bond, and a N-acylurea bond.

The isourea bond and the urea bond are formed at a crosslinking portion by the reaction of the carbodiimide group of the polycarbodiimide compound with the hydroxy group of the resin (A). The N-acylurea bond is formed at a crosslinking portion by the reaction of the carbodiimide group of the polycarbodiimide compound with the carboxy group of the resin (A). With such a bond, the resin crosslinked body (1) having high crosslinking strength is obtained.

The resin crosslinked body (1) is obtained by the reaction under heating of the resin composition containing the polycarbodiimide compound as the crosslinking agent (B).

Since the polycarbodiimide compound as the crosslinking agent is excellent in crosslinking reactivity to the rein (A) having the hydroxy group and/or the carboxy group as the crosslinkable group, the resin composition provides a resin crosslinked body having high crosslinking strength even at a reaction temperature lower than is generally employed.

Resin Crosslinked Body (2) (not according to the invention)

When the crosslinking agent (B) contains a polyoxazoline compound, a resin crosslinked body (2) that is a reaction product of the resin composition includes at least one bond selected from an amide ether bond and an amide ester bond. Resin crosslinked body (2) is not according to the invention.

The amide ether bond is formed at a crosslinking portion by the reaction of the oxazoline group of the polyoxazoline compound with the hydroxy group of the resin (A). The amide ester bond is formed at a crosslinking portion by the reaction of the oxazoline group of the polyoxazoline compound with the carboxy group of the resin (A). With

such a bond, the resin crosslinked body (2) having high crosslinking strength is obtained.

The resin crosslinked body (2) is obtained by the reaction under heating of the resin composition containing the polyoxazoline compound as the crosslinking agent (B).

Since the polyoxazoline compound as the crosslinking agent is excellent in crosslinking reactivity to the rein (A) having the hydroxy group and/or the carboxy group as the crosslinkable group, the resin composition provides a resin crosslinked body having high crosslinking strength even at a reaction temperature lower than is generally employed.

The resin crosslinked body may be a mixture of the resin crosslinked body (1) and the resin crosslinked body (2). That is, the polycarbodiimide compound and the polyoxazoline compound may be combinedly used as the crosslinking agent (B) in the resin composition.

Although the reaction temperature for producing the resin crosslinked body varies dependent on the kind of the resin (A) and the kind of the crosslinking agent. When the reaction temperature is made excessively high in order to promote the crosslinking reaction by the crosslinking agent, the resin (A) or the crosslinking agent may be discolored or the resin (A) itself may be thermally decomposed, thereby failing to obtain the resin crosslinked body.

In contrast, since the organometallic compound (C) is combinedly used with the crosslinking agent (B) in the present invention, the crosslinking reaction is performed at a temperature lower than is employed in the crosslinking reaction not using the organometallic compound (C). Therefore, the discoloration of the resin (A) or the crosslinking agent and the thermal decomposition of the resin (A) itself is avoided in the present invention.

As mentioned above, the resin crosslinked body of the invention is obtained from the resin composition having excellent crosslinking reactivity even at a lower temperature for the crosslinking reaction than is generally employed and has high crosslinking strength. Therefore, the resin crosslinking body exhibits various physical properties attributable to excellent crosslinking properties in various applications, such as paints, inks, fiber processing agents, adhesives, coating agents, electronic materials, and molded products composed of composite materials, e.g., the plastic molding materials and the fiber-reinforced plastic materials each mentioned above. The resin crosslinked body of the invention is excellent in physical properties, such as tensile strength, solvent resistance, hot water resistance, coating film adhesion, coating film hardness, coating film adhesion in hot water, heat resistance and mechanical strength of resin molded bodies, heat resistance of electrical insulating materials, low water absorbency, and adhesion.

## Examples

The present invention is hereunder described in detail by reference to Examples, but it should be construed that the present invention is not limited to these Examples.

Details of blending raw materials of each resin composition used in the following Examples and Comparative Examples are as follows. In the resin (A), the hydroxyl value is considered as a value based on the alcoholic hydroxy group, and the acid value is considered as a value based on the carboxy group.

### Resin (A)

(A-1) Acrylic resin solution (1): "A-837", manufactured by DIC Corporation, solid component (resin component): 50% by mass, hydroxyl value (solution): 25 mgKOH/g, solvent: mineral spirit, aromatic hydrocarbon

(A-2) Polyester resin: "FINEDIC (registered trademark) M-8023", manufactured by DIC Corporation, hydroxyl value (solution): 40 mgKOH/g, a hydroxy group-containing polyester resin for powder paint

(A-3) Polyurethane resin dispersion: "SANCURE (registered trademark) 777", manufactured by The Lubrizol Corporation, solid component (resin component): 35% by mass, acid value (dispersion): 21.4 mgKOH/g, an aqueous dispersion

(A-4) Acrylic resin solution (2): "ACRYDIC (registered trademark) A-801-P", manufactured by DIC Corporation, solid component (resin component): 50% by mass, hydroxyl value (solution): 50 mgKOH/g, acid value: 1.4 mgKOH/g, solvent: toluene and butyl acetate

(A-5) Phenoxy resin (1): "YP-70", manufactured by Nippon Steel & Sumikin Chemical Co., Ltd., solid component: 100% by mass, hydroxyl value: 207 mgKOH/g, bisphenol A/bisphenol F copolymer type

(A-6) Phenoxy resin (2): "EPICLON (registered trademark) HM-091", manufactured by DIC Corporation, solid component: 100% by mass, hydroxyl value: 207 mgKOH/g, bisphenol A solid type Crosslinking Agent (B)

(B1-1) Polycarbodiimide compound (1): product of Synthesis Example 1, solid component: 50% by mass, carbodiimide equivalent: 216 (expressed in terms of a solid component)

(B1-2) Polycarbodiimide compound (2): product of Synthesis Example 2, solid component: 30% by mass, carbodiimide equivalent: 205 (expressed in terms of a solid component)

(B1-3) Polycarbodiimide compound (3): product of Synthesis Example 3, solid component: 40% by mass, carbodiimide equivalent: 381 (expressed in terms of a solid component)
(B1-4) Polycarbodiimide compound (4): product of Synthesis Example 1 before charging toluene, solid component: 100% by mass, carbodiimide equivalent: 216
(B1-5) Polycarbodiimide compound (5): product of Synthesis Example 4, solid component: 50% by mass, carbodiimide equivalent: 184 (expressed in terms of a solid component)
(B1-6) Polycarbodiimide compound (6): product of Synthesis Example 4 before charging toluene, solid component: 100% by mass, carbodiimide equivalent: 184
(B2-1) Polyoxazoline compound: "EPOCROS (registered trademark) WS500", manufactured by Nippon Shokubai Co., Ltd., oxazoline group-containing polymer, polymer main chain: acrylic, solid component (component concentration): 39% by mass, oxazoline equivalent: 220 (calculated value expressed in terms of a solid component), solvent: water and 1-methoxy-2-propanol

Organometallic compound (C)

(C1-1) Titanium alkoxide compound: product of Synthesis Example 5, titanium content: 2.9% by mass
(C1-2) Zirconium alkoxide compound: Zirconium tetra-n-propoxide; "ORGATIX ZA-45", manufactured by Matsumoto Fine Chemical Co., Ltd., component concentration: 75% by mass, zirconium content: 21.0% by mass, solvent: 1-propanol
(C1-3) Aluminum alkoxide compound: Aluminum tri-sec-butoxide; "ORGATIX AL-3001", manufactured by Matsumoto Fine Chemical Co., Ltd., aluminum content: 10.5% by mass
(C2-1) Titanium chelate compound (1): Titanium diisopropoxybis(acetylacetonate); "ORGATIX TC-100", manufactured by Matsumoto Fine Chemical Co., Ltd., component concentration: 75% by mass, titanium content: 9.8% by mass, solvent: 2-propanol
(C2-2) Titanium chelate compound (2): Ammonium titanium lactate; "ORGATIX TC-300", manufactured by Matsumoto Fine Chemical Co., Ltd., component concentration: 41% by mass, titanium content: 6.7% by mass, solvent: 2-propanol and water
(C2-3) Zirconium chelate compound: Zirconium tetraacetylacetonate; "ORGATIX ZC-150", manufactured by Matsumoto Fine Chemical Co., Ltd., zirconium content: 19.0% by mass
(C2-4) Aluminum chelate compound: Aluminum trisacetylacetonate; "ORGATIX AL-3100", manufactured by Matsumoto Fine Chemical Co., Ltd., aluminum content: 8.3% by mass
(C3-1) Titanium carboxylate compound: Isopropoxy titanium triisostearate; "ORGATIX TC-800", manufactured by Matsumoto Fine Chemical Co., Ltd., component concentration: 77% by mass, titanium content: 3.8% by mass, solvent: isostearic acid
(C3-2) Zirconium carboxylate compound: Zirconium octylate compound; "ORGATIX ZC-200", manufactured by Matsumoto Fine Chemical Co., Ltd., component concentration: 80% by mass, zirconium content: 12.4% by mass, solvent: 2-ethylhexanoic acid
(C3-3) Aluminum carboxylate compound: Aluminum p-t-butylbenzoate; "A-46", manufactured by Sakai Chemical Industry Co., Ltd., aluminum content: 6.8% by mass
(C4-1) Lithium chelate compound: Lithium acetylacetonate, manufactured by Tokyo Chemical Industry Co., Ltd., lithium content: 6.5% by mass
(C4-2) Calcium chelate compound: Calcium acetylacetonate, manufactured by Tokyo Chemical Industry Co., Ltd., calcium content: 16.7% by mass
(C4-3) Zinc chelate compound: Zinc acetylacetonate, manufactured by Tokyo Chemical Industry Co., Ltd., zinc content: 25.0% by mass
(C5-1) Sodium carboxylate compound (1): Sodium stearate, manufactured by Tokyo Chemical Industry Co., Ltd., sodium content: 7.5% by mass
(C5-2) Sodium carboxylate compound (2): Sodium benzoate, manufactured by Tokyo Chemical Industry Co., Ltd., sodium content: 16.0% by mass
(C5-3) Barium carboxylate compound: Barium stearate; "SB", manufactured by Sakai Chemical Industry Co., Ltd., barium content: 19.5% by mass
(C5-4) Magnesium carboxylate compound: Magnesium stearate; "SM-P", manufactured by Sakai Chemical Industry Co., Ltd., magnesium content: 4.1% by mass
(C5-5) Zinc carboxylate compound (1): Zinc stearate; "SZ-P", manufactured by Sakai Chemical Industry Co., Ltd., zinc content: 10.3% by mass
(C5-6) Zinc carboxylate compound (2): Zinc p-t-butylbenzoate; "Z-46", manufactured by Sakai Chemical Industry Co., Ltd., zinc content: 15.5% by mass

(C5-7) Bismuth carboxylate compound: Bismuth 2-ethylhexylate; "PUCAT 25", manufactured by Nihon Kagaku Sangyo Co., Ltd., bismuth content: 25% by mass
(C6-1) Tin carboxylate compound (1): Dibutyltin dilaurate, manufactured by Tokyo Chemical Industry Co., Ltd., tin content: 18.8% by mass
(C6-2) Tin carboxylate compound (2): Dioctyltin maleate polymer; "SCAT-47", manufactured by Nitto Kasei Co., Ltd., tin content: 26.0% by mass
(C7-1) Tin oxide compound: Dioctyltin oxide; "STANN DOTO", manufactured by Nitto Kasei Co., Ltd., tin content: 33.0% by mass

Tertiary Amine Compound

TEDA: 1,4-Diazabicyclo[2.2.2]octane (triethylenediamine)

Synthesis Example 1: Synthesis of Polycarbodiimide Compound (1)

In a 2-L reaction vessel equipped with a reflux tube and a stirrer, 314 g of dicyclohexylmethane-4,4'-diisocyanate, 38.2 g of cyclohexyl isocyanate, and 2.4 g of 3-methyl-1-phenyl-2-phospholene-1-oxide (carbodiimidization catalyst) were charged and allowed to react with each other under a nitrogen gas stream at 180°C for 56 h and then cooled to 90°C. The reaction product was dissolved in toluene to obtain a solution of a polycarbodiimide compound having a solid component of 50% by mass (carbodiimide equivalent: 216 (expressed in terms of a solid component)).

Synthesis Example 2: Synthesis of Polycarbodiimide Compound (2)

In a 1-L reaction vessel equipped with a reflux tube and a stirrer, 100 g of 4,4'-diphenylmethane diisocyanate, 9.52 g of phenyl isocyanate, 1 g of 3-methyl-1-phenyl-2-phospholene-1-oxide (carbodiimidization catalyst), and 256 g of tetrahydrofuran were charged and allowed to react with each other under a nitrogen gas stream at 60°C for 3 h and then cooled to 25°C to obtain a solution of a polycarbodiimide compound having a solid component of 30% by mass (carbodiimide equivalent: 205 (expressed in terms of a solid component)).

Synthesis Example 3: Synthesis of Polycarbodiimide Compound (3)

In a 3-L reaction vessel equipped with a reflux tube and a stirrer, 1,572 g of dicyclohexylmethane-4,4'-diisocyanate and 7.86 g of 3-methyl-1-phenyl-2-phospholene-1-oxide (carbodiimidization catalyst) were charged and stirred under a nitrogen gas stream at 185°C for 10 h to obtain an isocyanate-terminated polycarbodiimide that is a polymer of the dicyclohexylmethane-4,4'-diisocyanate.

The isocyanate-terminated polycarbodiimide was mixed with a toluene solution of di-n-butylamine having a known concentration, thereby allowing the terminal isocyanate group to react with the di-n-butylamine. The residual di-n-butylamine was neutralized by titration with a standard hydrochloric acid. Then, the residual amount (% by mass) of the isocyanate group (amount of terminal isocyanate group) was calculated by a potentiometric titration method (device used: automated titration device "COM-900", manufactured by Hiranuma Sangyo Co., Ltd.) and found to be 5.00% by mass. That is, the polymerization degree of the isocyanate-terminated polycarbodiimide (average number of the carbodiimide groups in one molecule) was 6.5.

51.8 g of the obtained isocyanate-terminated polycarbodiimide was dissolved at 120°C, to which was added 24.7 g of polyethylene glycol monomethyl ether ("BLAUNON MP-400", manufactured by Aoki Oil Industrial Co., Ltd., molecular weight: 400 (catalogue value)), and the contents were heated to 140°C and allowed to react with each other for 5 h under stirring. The infrared absorption spectrum measurement on the reaction product showed that the absorption of the isocyanate group at a wavelength of 2,200 to 2,300 $cm^{-1}$ was disappeared. After cooling the reaction product to 80°C, 115 g of ion-exchanged water was added and the resultant mixture was stirred for one hour to obtain a solution of a polycarbodiimide (carbodiimide equivalent: 381 (expressed in terms of a solid component)) having a solid component of 40% by mass.

Synthesis Example 4: Synthetic of Polycarbodiimide Compound (5)

In a 500-mL reaction vessel equipped with a reflux tube and a stirrer, 100 g of isophorone diisocyanate, 28.1 g of cyclohexyl isocyanate, and 2.0 g of 3-methyl-1-phenyl-2-phospholene-1-oxide (carbodiimidization catalyst) were charged and allowed to react with each other under a nitrogen gas stream at 150°C for 24 h. The infrared absorption spectrum measurement on the reaction product showed that the absorption of the isocyanate group at a wavelength of 2,200 to 2,300 $cm^{-1}$ was disappeared. The reaction product was taken out from the reaction vessel and cooled to room temperature

(25°C). Then, toluene was added to adjust the solid component to 50% by mass, thereby obtaining a solution of a polycarbodiimide (carbodiimide equivalent: 184 (expressed in terms of a solid component)).

Synthesis Example 5: Synthesis of Titanium Alkoxide Compound

In a 500-mL reaction vessel equipped with a stirrer, 50 g of titanium tetraisopropoxide ("TA-8", manufactured by Matsumoto Fine Chemical Co., Ltd.; titanium content: 16.9% by mass) and 282 g of polyethylene glycol monomethyl ether ("BLAUNON MP-400", manufactured by Aoki Oil Industrial Co., Ltd., molecular weight: 400 (catalogue value)) were charged and stirred under a nitrogen gas stream at 90°C for 24 h. Then, isopropyl alcohol was discharged out of the reaction vessel to obtain a reaction product.

2.00 g of the obtained reaction product weighed in an alumina crucible was heated at 600°C for 3 h. The amount of the residue (titanium oxide) was 0.0969 g. Thus, it was confirmed that the reaction product was a targeted product in which the isopropoxy group was substantially entirely substituted with polyethylene glycol monomethyl ether.

Production of Acrylic Resin Composition (1)

Example 1

In a 200-mL plastic container, 100 g of the acrylic resin solution (1) (resin (A-1)), 4.81 g of the polycarbodiimide compound (1) (crosslinking agent (B1-1)) (0.5 mol of the carbodiimide group per one mole of the alcoholic hydroxy group of the resin (A-1)), and 2.0 g of the titanium alkoxide compound (organometallic compound (C1-1)) (0.12 parts by mass of titanium (metal) element based on 100 parts by mass of the solid component of the acrylic resin (resin (A-1)) were weighed and mixed under stirring for one hour, thereby obtaining an acrylic resin composition that was free from undissolved components under visual inspection.

Examples 2 to 14 (Examples 2, 3, 5 to 10, 13 and 14 not according to the invention) and Comparative Examples 1 and 2

Each of acrylic resin compositions was obtained in the same manner as in Example 1 except for changing the formulation as shown in Table 1.

The acrylic resin compositions of Comparative Example 1 and Comparative Example 2 are the same composition not containing the organometallic compound (C).

Evaluation of Resin Crosslinked Body (1)

Each of the acrylic resin compositions produced in Examples and Comparative Examples was coated in a thickness of 200 μm on a 75 pm-thick polyethylene terephthalate (PET) sheet that had been processed with a release agent by using a bar coater and then dried in a dryer set at 130°C (reaction temperature) for 10 min. Thereafter, the coated rein composition was aged in a room at 25°C for one day to prepare a resin crosslinked body.

In Comparative Example 2, the reaction temperature was changed to 200°C.

Each of these resin crosslinked bodies was subjected to the following tensile test. Considering that the measured tensile strength corresponded to the crosslinking strength of the resin crosslinked body, the crosslinking strength of each of the resin crosslinked bodies was evaluated.

Tensile Test

The PET sheet was peeled off from the coating film of the resin crosslinked body, and the coating film was cut into a strip having a thickness of 100 μm, a width of 10 mm and a length of 100 mm to prepare a specimen. The test condition is as follows.

Test Condition

Testing machine: Electromechanical universal material testing machine (dual column tabletop testing machine) "3365" manufactured by Instron Inc.

Gauge length: 50 mm
Tensile speed: 200 mm/min

The tensile strength when the specimen was broken was measured. In Reference Example 1, only the same acrylic resin solution as used in the Examples and Comparative Examples was made into a specimen in the same manner as in the preparation of the specimen of resin crosslinked body and the tensile strength of the specimen was taken as the blank value.

A ratio S of the measured tensile strength of each specimen to the blank value was determined, and the strength ratio S was evaluated according to the following evaluation ratings.

Evaluation Ratings

A:

$$1.25 < S$$

B:

$$1.1 < S \leq 1.25$$

C:

$$1 < S \leq 1.1$$

D: Blank value (S = 1)

When rated as A, the resin crosslinked body has excellent crosslinking strength. When rated as B, the resin crosslinked body has sufficient crosslinking strength, although slightly inferior to the crosslinking properties rated as A. When rated as C, the crosslinking properties are more inferior and the resin crosslinked body does not have sufficient crosslinking properties. When rated as D, the crosslinking strength is equal to the blank value and the reaction product is considered to be not substantially crosslinked.

The evaluation results of the tensile test are shown in Table 1.

Table 1

| Formulation (g) | Examples | | | | | | | | | | | | | | Comparative Examples | | Reference Example |
|---|---|---|---|---|---|---|---|---|---|---|---|---|---|---|---|---|---|
| | 1 | 2* | 3* | 4 | 5* | 6* | 7* | 8* | 9* | 10* | 11 | 12 | 13* | 14* | 1 | 2 | 1 |
| Resin (A) | | | | | | | | | | | | | | | | | |
| (A-1) Acrylic resin solution (1) (solid component: 50% by mass) | 100 | 100 | 100 | 100 | 100 | 100 | 100 | 100 | 100 | 100 | 100 | 100 | 100 | 100 | 100 | 100 | 100 |
| Crosslinking agent (B) | | | | | | | | | | | | | | | | | |
| (B1-1) Polycarbodiimide compound (1) (solid component: 50% by mass) | 4.81 | 4.81 | 4.81 | 4.81 | 4.81 | 4.81 | 1.92 | 19.2 | 4.81 | 4.81 | 0.96 | 38.4 | 4.81 | 4.81 | 4.81 | 4.81 | |
| (Carbodiimide group (mol) (vs. one mole of alcoholic hydroxy group of resin (A) ) | (0.5) | (0.5) | (0.5) | (0.5) | (0.5) | (0.5) | (0.2) | (2.0) | (0.5) | (0.5) | (0.1) | (4.0) | (0.5) | (0.5) | (0.5) | (0.5) | |
| Organic metal compound (C) | | | | | | | | | | | | | | | | | |
| (C1-1) Titanium alkoxide compound | 2.0 | | | | | | | | | | 2.0 | 2.0 | | | | | |
| (C2-1) Titanium chelate compound (1) (concentration: 75% by mass) | | 0.61 | | | | | 0.61 | 0.61 | 0.20 | 7.0 | | | 0.10 | 15.0 | | | |
| (C3-1) Titanium carboxylate compound (concentration: 77% by mass) | | | 1.58 | | | | | | | | | | | | | | |
| (C1-2) Zirconium alkoxide compound (concentration: 75% by mass) | | | | 0.29 | | | | | | | | | | | | | |
| (C2-3) Zirconium chelate compound | | | | | 0.32 | | | | | | | | | | | | |
| (C3-2) Zirconium carboxylate compound (concentration: 80% by mass) | | | | | | 0.48 | | | | | | | | | | | |
| (Amount in terms of metal element (parts by mass) (vs. 100 parts by mass of resin (A)) | (0.12) | (0.12) | (0.12) | (0.12) | (0.12) | (0.12) | (0.12) | (0.12) | (0.04) | (1.4) | (0.12) | (0.12) | (0.02) | (3.0) | | | |
| Reaction temperature (°C) | 130 | 130 | 130 | 130 | 130 | 130 | 130 | 130 | 130 | 130 | 130 | 130 | 130 | 130 | 130 | 200 | 130 |
| Tensile test evaluation of resin crosslinked body | A | A | A | A | A | A | A | A | A | A | B | B | B | B | D | C | D |

*: Examples 2, 3, 5 to 10, 13 and 14 not according to the invention

The evaluation results in Table 1 show that the acrylic resin composition in which the polycarbodiimide compound (1) and the organometallic compound (C) are blended is excellent in the crosslinking reactivity even at a reaction temperature as low as 130°C and improves the crosslinking strength.

On the other hand, when the organometallic compound (C) is not added (Comparative Example 1), it appears that the reaction product is not substantially crosslinked. Even when the organic compound (C) is not added, the crosslinking properties are somewhat improved by increasing the reaction temperature (Comparative Example 2), but a resin crosslinked body having sufficient crosslinking strength is not obtained.

When the blending amount of the polycarbodiimide compound (1) is large (Example 12) and when the blending amount of the titanium chelate compound (1) is large (Example 14, not according to the invention), it can be seen that the tensile strength is slightly lowered because the polycarbodiimide compound (1) or the titanium chelate compound (1) acts as a plasticizer.

Production of Acrylic Resin Composition (2) (not according to the invention) Example 15 (not according to the invention)

In a 200-mL plastic container, 100 g of the acrylic resin solution (1) (resin (A-1)), 6.3 g of the polyoxazoline compound (crosslinking agent (B2-1)) (0.5 mol of the oxazoline group per one mole of the alcoholic hydroxy group of the resin (A-1)), and 2.0 g of the titanium alkoxide compound (organometallic compound (C1-1)) (0.12 parts by mass in terms of titanium (metal) element based on 100 parts by mass of the solid component of the acrylic resin (resin (A-1))) were weighed and mixed under stirring for one hour, thereby obtaining an acrylic resin composition that was free from undissolved component under visual inspection.

Examples 16 to 21 (not according to the invention) and Comparative Examples 3 to 11

Each of acrylic resin compositions was obtained in the same manner as in Example 15 except for changing the formulation as shown in Table 2.

The acrylic resin compositions of Comparative Example 10 and Comparative Example 11 are the same composition not containing the organometallic compound (C).

Using each of the acrylic resin compositions produced in the Examples (not according to the invention) and Comparative Examples, a resin crosslinked body was prepared, which was then subjected to the tensile test to evaluate the crosslinking strength in the same manner as in the evaluation of resin crosslinked body (1).

In Comparative Example 11, the reaction temperature for preparing the resin crosslinked body was changed to 200°C.

The evaluation results of the tensile test are shown in Table 2.

Table 2

| Formulation (g) | Examples | | | | | | | Comparative Examples | | | | | | | | |
|---|---|---|---|---|---|---|---|---|---|---|---|---|---|---|---|---|
| | 15* | 16* | 17* | 18* | 19* | 20* | 21* | 3 | 4 | 5 | 6 | 7 | 8 | 9 | 10 | 11 |
| Resin (A) | | | | | | | | | | | | | | | | |
| (A-1) Acrylic resin solution (1) (solid component: 50% by mass) | 100 | 100 | 100 | 100 | 100 | 100 | 100 | 100 | 100 | 100 | 100 | 100 | 100 | 100 | 100 | 100 |
| Resin (B) | | | | | | | | | | | | | | | | |
| (B2-1) Polyoxazoline compound (solid component: 39% by mass) | 6.3 | 6.3 | 6.3 | 6.3 | 6.3 | 6.3 | 1.26 | | | | | | | | 6.3 | 6.3 |
| (Oxazoline group (mol) (vs. one mole of alcoholic hydroxy group of resin (A)) | (0.5) | (0.5) | (0.5) | (0.5) | (0.5) | (0.5) | (0.1) | | | | | | | | (0.5) | (0.5) |
| Organometallic compound (C) | | | | | | | | | | | | | | | | |
| (C1-1) Titanium alkoxide compound | 2.0 | | | | | | 2.0 | 2.0 | | | | | | | | |
| (C2-1) Titanium chelate compound (1) (concentration: 75% by mass) | | 0.61 | | | | | | | 0.61 | | | | | 10.0 | | |
| (C3-1) Titanium carboxylate compound (concentration: 77% by mass) | | | 1.58 | | | | | | | 1.58 | | | | | | |
| (C1-2) Zirconium alkoxide compound (concentration: 75% by mass) | | | | 0.29 | | | | | | | 0.29 | | | | | |
| (C2-3) Zirconium chelate compound | | | | | 0.32 | | | | | | | 0.32 | | | | |
| (C3-2) Zirconium carboxylate compound (concentration: 80% by mass) | | | | | | 0.48 | | | | | | | 0.48 | | | |
| (Amount in terms of metal element (parts by mass) (vs. 100 parts by mass of resin (A)) | (0.12) | (0.12) | (0.12) | (0.12) | (0.12) | (0.12) | (0.12) | (0.12) | (0.12) | (0.12) | (0.12) | (0.12) | (0.12) | (2.0) | | |
| Reaction temperature (°C) | 130 | 130 | 130 | 130 | 130 | 130 | 130 | 130 | 130 | 130 | 130 | 130 | 130 | 130 | 130 | 200 |
| Tensile test evaluation of resin crosslinked body | A | A | A | A | A | A | B | D | D | D | D | D | D | D | D | C |

*: Examples 15 to 21 not according to the invention

The evaluation results in Table 2 show that the acrylic resin composition in which the polyoxazoline compound and the organometallic compound (C) are blended is excellent in the crosslinking reactivity even at a reaction temperature as low as 130°C and improves the crosslinking strength.
On the other hand, when the organometallic compound (C) is not added (Comparative Example 10), it appears that the reaction product is not substantially crosslinked. Even when the organic compound (C) is not added, the crosslinking properties are somewhat improved by increasing the reaction temperature (Comparative Example 11), but a resin crosslinked body having sufficient crosslinking strength is not obtained.
When the crosslinking agent (B) is not added (Comparative Examples 3 to 9), it appears that the reaction product is not substantially crosslinked.

Production of Polyester Resin Composition (1)

Example 22

In a 200-mL plastic container, 20 g of the polyester resin (resin (A-2)), 80 g of tetrahydrofuran, 9.74 g of the polycarbodiimide compound (2) (crosslinking agent (B1-2)) (1.0 mol of the carbodiimide group per one mole of the alcoholic hydroxy group of the polyester resin (resin (A-2))), and 0.68 g of the titanium alkoxide compound (organometallic compound (C1-1)) (0.1 parts by mass in terms of titanium (metal) element based on 100 parts by mass of the polyester resin (resin (A-2))) were weighed and mixed under stirring for one hour, thereby obtaining a polyester resin composition that was free from undissolved component under visual inspection.

Examples 23 to 32 (Examples 23, 24, 26, 27 and 29 to 32 not according to the invention) and Comparative Examples 12 to 14

Each of polyester resin compositions was obtained in the same manner as in Example 22 except for changing the formulation as shown in Table 3.
The polyester resin compositions of Comparative Example 13 and Comparative Example 14 are the same composition not containing the organometallic compound (C).

Evaluation of Resin Crosslinked Body (2)

Each of the polyester resin compositions produced in Examples and Comparative Examples was coated in a thickness of 250 μm on a 600 pm-thick aluminum substrate by using a bar coater and then baked by drying in a dryer set at 180°C (reaction temperature) for 30 min to prepare a resin crosslinked body.
In Comparative Example 14, the reaction temperature for preparing a resin crosslinked body was changed to 230°C.
Each of these resin crosslinked bodies was subjected to the following solvent resistance test and hot water resistance test to evaluate the crosslinking strength of each resin crosslinked body. The coating film (resin crosslinked body) having a higher solvent resistance and a higher hot water resistance was regarded as having a higher crosslinking strength.

Solvent Resistance Test

The test condition is as follows.

Test Condition

Testing machine: Friction tester (Model FR-1B manufactured by Suga Test Instruments Co., Ltd.)

Testing solvent: Methyl ethyl ketone (MEK)
Load: 900 g/cm$^2$
Number of rubbing: 10 times of reciprocation

The surface of the resin crosslinked body (coating film) was subjected to double rubbing (reciprocal rubbing) with cotton wool impregnated with the solvent under the test condition, and then, the state of the surface was visually observed and evaluated according to the following evaluation ratings.

Evaluation Ratings

A: The coating film was not changed.
B: The coating film was whitened and scarred.
C: The coating film was pierced and the substrate was exposed at a part of the rubbed portion.
D: The coating film was dissolved and the whole of the rubbed portion of the substrate was exposed.

When rated as A, the resin crosslinked body has excellent crosslinking strength. When rated as B, the resin crosslinked body has sufficient crosslinking strength, although the crosslinking properties are slightly inferior to those rated as A. When rated as C, the crosslinking properties are more inferior and the resin crosslinked body does not have sufficient crosslinking strength. When rated as D, it seems that the coating film is not substantially crosslinked.

Hot Water Resistance Test

In a 5-L beaker, 2.5 kg of ion-exchanged water was charged. A specimen of 200 mm × 100 mm (resin crosslinked body on aluminum substrate) was sunk in the water and the beaker was covered with an aluminum foil. After allowing stand in a dryer set at 95°C for 24 h, the specimen was taken out and the surface of the coating film (resin crosslinked body) was visually observed and evaluated according to the following ratings.

Evaluation Ratings

A: The coating film was not changed.
B: The coating film was partially whitened.
C: The coating film was entirely whitened but the surface was smooth.
D: The coating film was entirely whitened and the surface was uneven.

When rated as A, the resin crosslinked body has excellent crosslinking strength. When rated as B, the resin crosslinked body has sufficient crosslinking strength, although the crosslinking properties are slightly inferior to those rated as A. When rated as C, the crosslinking properties are more inferior and the resin crosslinked body does not have sufficient crosslinking strength. When rated as D, it seems that the coating film is not substantially crosslinked.

The evaluation results of the solvent resistance test and the hot water resistance test are collectively shown in Table 3.

Table 3

| Formulation (g) | Examples | | | | | | | | | | | Comparative Examples | | |
|---|---|---|---|---|---|---|---|---|---|---|---|---|---|---|
| | 22 | 23* | 24* | 25 | 26* | 27* | 28 | 29* | 30* | 31* | 32* | 12 | 13 | 14 |
| Resin (A) | | | | | | | | | | | | | | |
| (A-2) Polyester resin | 20 | 20 | 20 | 20 | 20 | 20 | 20 | 20 | 20 | 20 | 20 | 20 | 20 | 20 |
| Crosslinking agent (B) | | | | | | | | | | | | | | |
| (B1-2) Polycarbodiimide compound (2) (solid component: 30% by mass) | 9.74 | 9.74 | 9.74 | 9.74 | 9.74 | 9.74 | 9.74 | 9.74 | 9.74 | 1.42 | 9.74 | | 9.74 | 9.74 |
| (Carbodiimide group (mol) (vs. one mole of alcoholic hydroxy group of resin (A)) | (1.0) | (1.0) | (1.0) | (1.0) | (1.0) | (1.0) | (1.0) | (1.0) | (1.0) | (0.15) | (1.0) | | (1.0) | (1.0) |
| Organometallic compound (C) | | | | | | | | | | | | | | |
| (C1-1) Titanium alkoxide compound | 0.68 | | | | | | | | | | | | | |
| (C2-1) Titanium chelate compound (1) (concentration: 75% by mass) | | 0.2 | | | | | | | | 0.2 | 0.06 | 0.2 | | |
| (C3-1) Titanium carboxylate compound (concentration: 77% by mass) | | | 0.52 | | | | | | | | | | | |
| (C1-2) Zirconium alkoxide compound (concentration: 75% by mass) | | | | 0.09 | | | | | | | | | | |
| (C2-3) Zirconium chelate compound | | | | | 0.10 | | | | | | | | | |
| (C3-2) Zirconium carboxylate compound (concentration: 80% by mass) | | | | | | 0.16 | | | | | | | | |
| (C1-3) Aluminum alkoxide compound | | | | | | | 0.19 | | | | | | | |
| (C2-4) Aluminum chelate compound | | | | | | | | 0.24 | | | | | | |
| (C3-3) Aluminum carboxylate compound | | | | | | | | | 0.29 | | | | | |
| (Amount in terms of metal element (parts by mass) (vs. 100 parts by mass of resin (A)) | (0.1) | (0.1) | (0.1) | (0.1) | (0.1) | (0.1) | (0.1) | (0.1) | (0.1) | (0.1) | (0.03) | (0.1) | | |
| Reaction temperature (°C) | 180 | 180 | 180 | 180 | 180 | 180 | 180 | 180 | 180 | 180 | 180 | 180 | 180 | 230 |
| Solvent resistance test evaluation of resin crosslinked body | A | A | A | A | A | A | A | A | A | B | B | D | D | C |
| Hot water resistance test evaluation of resin crosslinked body | A | A | A | A | A | A | A | A | A | B | B | D | D | C |

*: Examples 23, 24, 26, 27 and 29 to 32 not according to the invention

The evaluation results in Table 3 show that the polyester resin composition in which the polycarbodiimide compound (2) and the organometallic compound (C) are blended is excellent in the crosslinking reactivity even at a temperature as low as 180°C and improves the crosslinking strength.

On the other hand, when the organometallic compound (C) is not added (Comparative Example 13), it appears that the reaction product is not substantially crosslinked. Even when the organic compound (C) is not added, the crosslinking properties is somewhat improved by increasing the reaction temperature (Comparative Example 14), but a resin crosslinked body having sufficient crosslinking strength is not obtained.

When the crosslinking agent (B) is not added (Comparative Example 12), it appears that the reaction product is not substantially crosslinked.

Production of Polyester Resin Composition (2)

Examples 33 to 45 (not according to the invention) and Comparative Example 15

Each of resin compositions was obtained in the same manner as in Example 22 except for changing the formulation as shown in Table 4.

The polyester resin composition of Comparative Example 15 is a composition not containing the organometallic compound (C).

Using each of the polyester resin compositions produced in Examples (not according to the invention) and Comparative Example, a resin crosslinked body was prepared, which was then subjected to the solvent resistance test and the hot water resistance test to evaluate the crosslinking strength in the same manner as in the evaluation of resin crosslinked body (2).

In Comparative Example 15, the reaction temperature for preparing the resin crosslinked body was changed to 230°C.

The evaluation results of the solvent resistance test and the hot water resistance test are collectively shown in Table 4.

Table 4

| Formulation (g) | Examples 33* | 34* | 35* | 36* | 37* | 38* | 39* | 40* | 41* | 42* | 43* | 44* | 45* | Comparative Example 15 |
|---|---|---|---|---|---|---|---|---|---|---|---|---|---|---|
| Resin (A) | | | | | | | | | | | | | | |
| (A-2) Polyester resin | 20 | 20 | 20 | 20 | 20 | 20 | 20 | 20 | 20 | 20 | 20 | 20 | 20 | 20 |
| Crosslinking agent (B) | | | | | | | | | | | | | | |
| (B1-1) Polycarbodiimide compound (1) (solid component: 50% by mass) | | | | | | | | | | | 6.16 | 6.16 | 6.16 | 6.16 |
| (B1-2) Polycarbodiimide compound (2) (solid component: 30% by mass) | 9.74 | 9.74 | 9.74 | 9.74 | 9.74 | 9.74 | 9.74 | 9.74 | 9.74 | 9.74 | | | | |
| (Carbodiimide group (mol) (vs. one mole of alcoholic hydroxy group of resin (A)) | (1.0) | (1.0) | (1.0) | (1.0) | (1.0) | (1.0) | (1.0) | (1.0) | (1.0) | (1.0) | (1.0) | (1.0) | (1.0) | (1.0) |
| Organometallic compound (C) | | | | | | | | | | | | | | |
| (C4-1) Lithium chelate compound | 0.31 | | | | | | | | | | | | | |
| (C5-1) Sodium carboxylate compound (1) | | 0.27 | | | | | | | | | | | | |
| (C5-2) Sodium carboxylate compound (2) | | | 0.13 | | | | | | | | | | | |
| (C4-2) Calcium chelate compound | | | | 0.12 | | | | | | | | | | |
| (C5-3) Barium carboxylate compound | | | | | 0.10 | | | | | | | | | |
| (C5-4) Magnesium carboxylate compound | | | | | | 0.49 | | | | | | | | |
| (C4-3) Zinc chelate compound | | | | | | | 0.08 | | | | 0.08 | | | |
| (C5-5) Zinc carboxylate compound (1) | | | | | | | | 0.19 | | | | 0.19 | | |
| (C5-6) Zinc carboxylate compound (2) | | | | | | | | | 0.13 | | | | 0.13 | |
| (C5-7) Bismuth carboxylate compound | | | | | | | | | | 0.08 | | | | |
| (Amount in terms of metal element (parts by mass) (vs. 100 parts by mass of resin (A)) | (0.1) | (0.1) | (0.1) | (0.1) | (0.1) | (0.1) | (0.1) | (0.1) | (0.1) | (0.1) | (0.1) | (0.1) | (0.1) | |
| Reaction temperature (°C) | 180 | 180 | 180 | 180 | 180 | 180 | 180 | 180 | 180 | 180 | 180 | 130 | 180 | 230 |
| Solvent resistance test evaluation of resin crosslinked body | A | A | A | A | A | A | A | A | A | A | A | A | A | C |
| Hot water resistance test evaluation of resin crosslinked body | A | A | A | A | A | A | A | A | A | A | A | A | A | C |

*: Examples 33 to 45 not according to the invention

The evaluation results shown in Table 4 show that the polyester resin composition in which the polycarbodiimide compound (1) or (2) and the organometallic compound (C) are blended is excellent in the crosslinking reactivity even at a temperature as low as 180°C and improves the crosslinking strength.

On the other hand, when the organometallic compound (C) is not added (Comparative Example 15), it appears that the reaction product is not substantially crosslinked.

Production of Polyurethane Resin Composition

Example 46

In a 200-mL plastic container, 100 g of the polyurethane resin dispersion (resin (A-3)), 7.00 g of the polycarbodiimide compound (3) (crosslinking agent (B1-3)) (0.55 mol of the carbodiimide group per one mole of the carboxy group of the resin (A-3)), and 2.0 g of the titanium alkoxide compound (organometallic compound (C1-1)) (0.17 parts by mass in terms of titanium (metal) element based on 100 parts by mass of the solid component of the polyurethane resin (resin (A-1))) were weighed and mixed under stirring for one hour to obtain a polyurethane resin composition.

Examples 47 and 48 (not according to the invention) and Comparative Examples 16 to 21

Each of polyurethane resin compositions was obtained in the same manner as in Example 46 except for changing the formulation as shown in Table 5.

The polyurethane resin compositions of Comparative Example 19, Comparative Example 20, and Comparative Example 21 are the same composition not containing the organometallic compound (C).

Evaluation of Resin Crosslinked Body (3)

Each of the polyurethane resin compositions produced in Examples and Comparative Examples was coated in a thickness of 60 μm on a 600 pm-thick aluminum substrate by using a bar coater and then dried in a chamber set at 25°C (reaction temperature) for 5 h to prepare a resin crosslinked body.

In Comparative Example 20, the reaction for preparing a resin crosslinked body was conducted at 120°C for 5 h. In Comparative Example 21, the reaction for preparing a resin crosslinked body was conducted at 25°C for 48 h.

Each of these resin crosslinked bodies was subjected to the following solvent resistance test to evaluate the crosslinking strength of each resin crosslinked body. The coating film (resin crosslinked body) having a higher solvent resistance was regarded as having a higher crosslinking strength.

Solvent Resistance Test

The test condition is as follows.

Test Condition

Testing machine: Friction tester (Model FR-1B manufactured by Suga Test Instruments Co., Ltd.)
Testing solvent: Ethanol (95% by volume aqueous solution)
Load: 900 g/cm$^2$
Number of rubbing: 100 times of reciprocation

The surface of the resin crosslinked body (coating film) was subjected to double rubbing (reciprocal rubbing) with cotton wool impregnated with the solvent under the test condition, and then, the state of the surface was visually observed and evaluated according to the following evaluation ratings.

Evaluation Ratings

A: The coating film was not changed.
B: The coating film was whitened and scarred.
C: The coating film was pierced and the substrate was exposed at a part of the rubbed portion.

D: The coating film was dissolved and the substrate was exposed at the whole of the rubbed portion.

When rates as A, the resin crosslinked body has excellent crosslinking strength. When rated as B, the resin crosslinked body has sufficient crosslinking strength, although the crosslinking properties were slightly inferior to those rated as A. When rated as C, the crosslinking properties are more inferior and the resin crosslinked body does not have sufficient crosslinking strength. When rated as D, it seems that the coating film is not substantially crosslinked.

The evaluation results of the solvent resistance test are shown in Table 5.

Table 5

| Formulation (g) | Examples 46 | 47* | 48* | Comparative Examples 16 | 17 | 18 | 19 | 20 | 21 |
|---|---|---|---|---|---|---|---|---|---|
| Resin (A) | | | | | | | | | |
| (A-3) Polyurethane resin dispersion (solid component: 35% by mass) | 100 | 100 | 100 | 100 | 100 | 100 | 100 | 100 | 100 |
| Crosslinking agent (B) | | | | | | | | | |
| (B1-3) Polycarbodiimide compound (3) (solid component: 40% by mass) | 7.00 | 7.00 | 7.00 | | | | 7.00 | 7.00 | 7.00 |
| Carbodiimide group (mol) (vs. one mole of alcoholic hydroxy group of resin (A)) | (0.55) | (0.55) | (0.55) | | | | (0.55) | (0.55) | (0.55) |
| Organometallic compound (C) | | | | | | | | | |
| (C1-1) Titanium alkoxide compound | 2.0 | | | 2.0 | | | | | |
| (C2-2) Titanium chelate compound (2) | | 0.87 | | | 0.87 | | | | |
| (C5-2) Sodium carboxylate compound (2) | | | 0.36 | | | 0.36 | | | |
| (Amount in terms of metal element (parts by mass) (vs. 100 parts by mass of resin (A)) | (0.17) | (0.17) | (0.17) | (0.17) | (0.17) | (0.17) | | | |
| Reaction temperature (°C) | 25 | 25 | 25 | 25 | 25 | 25 | 25 | 120 | 25 |
| Reaction time (h) | 5 | 5 | 5 | 5 | 5 | 5 | 5 | 5 | 48 |
| Solvent resistance test evaluation of resin crosslinked body | A | A | A | D | D | D | C | A | B |

* Examples 47 and 48 not according to the invention

The evaluation results in Table 5 show that the polyurethane resin composition in which the polycarbodiimide compound (3) and the organometallic compound (C) are blended to the polyurethane resin having a carboxy group is excellent in the crosslinking reactivity even at a reaction temperature as low as room temperature (25°C) and even for a shorter reaction time and improves the crosslinking strength, as compared with Comparative Examples 19 to 21 wherein the organometallic compound (C) is not added.

When the crosslinking agent (B) is not added (Comparative Examples 16 to 18), it appears that the reaction product is not substantially crosslinked.

Preparation of Oily Paint

Example 49

In a 300-mL four-necked flask, 100 g of the acrylic resin solution (2) (resin (A-4)), 19.7 g of the polycarbodiimide compound (1) (crosslinking agent (B1-1)) (1.0 mol of the carbodiimide group per one mole of the total of the alcoholic hydroxy group and the carboxy group of the resin (A-4)), and 2.0 g of the titanium alkoxide compound (organometallic compound (C1-1)) (0.12 parts by mass in terms of titanium (metal) element based on 100 parts by mass of the solid component of the acrylic resin (resin (A-1))) were charged and mixed under stirring for one hour to obtain an oily paint.

Examples 50 to 59 (Examples 50, 51, 53, 54 and 56 to 59 not according to the invention) and Comparative Examples 22 and 23

Each of oily paints was obtained in the same manner as in Example 49 except for changing the formulation as shown in Table 6.
The oily paints of Comparative Examples 22 and 23 do not contain the organometallic compound (C).

Evaluation of Oily Paint

Each of the oily paints prepared in Examples and Comparative Examples was coated on an aluminum sheet (standard specimen "Q-PANEL AL-46" manufactured by Sanyo Trading Co., Ltd., 102 mm × 305 mm, thickness: 640 μm) by using a wire bar (wire diameter: 75 μm) and then baked by drying in a dryer set at 180°C (reaction temperature) for 30 min to prepare each coating film samples having a thickness of about 65 μm.
Each of the coating film samples was subjected to adhesion evaluation by a cross-cut test and subjected to hardness evaluation by a pencil scratch hardness test as shown below.
The evaluation results are collectively shown in Table 6.

Cross-cut Test

Cross cuts having a cut interval of 2 mm were prepared in accordance with the cross-cut method of JIS K5600-5-6:1999 and the test was performed using "Scotch (registered trademark) Filament Tape 880" (manufactured by 3M Company, adhesive strength: 8.8 N/cm) as a tape. The results of adhesion evaluation in accordance with the six-grade scales from 0 to 5 as described in the above JIS standard are shown in Table 6. The smaller the numerical value of the scale is, the more excellent the adhesion of the coating film is.

Evaluation Scales

0: The edges of the cuts were completely smooth. None of the squares of the lattice was detached.
1: Small flakes of the coating film were detached at intersections. The area affected did not clearly exceed 5% of the cross-cut portion.
2: The coating film was flaked along edges and/or at intersections of cuts. The area affected clearly exceeded 5% but did not exceed 15% of the cross-cut portion.
3: The coating film was largely detached partly or entirely along the edges and/or the squares of the lattice were partly or entirely detached at their various portions. The area affected clearly exceeded 15% but did not exceed 35% of the cross-cut portion.
4: The coating film was largely detached partly or entirely along the edges and/or the several squares of the lattice were partly or entirely detached. The area affected did not clearly exceed 65% of the cross-cut portion.
5: Flaking and detachment not classified into Scale 4.

Pencil Scratch Hardness Test

The hardness test was performed in accordance with the pencil method of JIS K5600-5-4:1999 using a pencil scratch hardness testing machine ("No. 553-S" manufactured by Yasuda Seiki Company) under a condition at a load of 750 g by using "UNI" (2B to 4H manufactured by Mitsubishi Pencil Co., Ltd.) as a pencil. The hardness number of the hardest pencil that did not scratch the coating film is shown in Table 6 as the results of hardness evaluation of the coating film. The higher the hardness of the pencil is, the higher the hardness of the coating film is.

Table 6

| Formulation (g) | Examples | | | | | | | | | | | Comparative Examples | |
|---|---|---|---|---|---|---|---|---|---|---|---|---|---|
| | 49 | 50* | 51* | 52 | 53* | 54* | 55 | 56* | 57* | 58* | 59* | 22 | 23 |
| Resin (A) | | | | | | | | | | | | | |
| (A-4) Acrylic resin solution (2) (solid component: 50% by mass) | 100 | 100 | 100 | 100 | 100 | 100 | 100 | 100 | 100 | 100 | 100 | 100 | 100 |
| Crosslinking agent (B) | | | | | | | | | | | | | |
| (B1-1) Polycarbodiimide compound (1) (solid component: 50% by mass) | 19.7 | 19.7 | 19.7 | | | | | | | 9.9 | 29.6 | 19.7 | |
| (B1-2) Polycarbodiimide compound (2) (solid component: 30% by mass) | | | | 31.3 | 31.3 | 31.3 | | | | | | | 31.3 |
| (B1-5) Polycarbodiimide compound (5) (solid component: 50% by mass) | | | | | | | 16.9 | 16.9 | 16.9 | | | | |
| (Carbodiimide group (mol) (vs. one mole of the total of alcoholic hydroxy group and carboxy group of resin (A)) | (1.0) | (1.0) | (1.0) | (1.0) | (1.0) | (1.0) | (1.0) | (1.0) | (1.0) | (0.5) | (1.5) | (1.0) | (1.0) |
| Organometallic compound (C) | | | | | | | | | | | | | |
| (C1-1) Titanium alkoxide compound | 2.0 | | | 2.0 | | | 2.0 | | | | | | |
| (C5-5) Zinc carboxylate compound (1) | | 0.56 | | | 0.56 | | | 0.56 | | 0.56 | 0.56 | | |
| (C6-1) Tin carboxylate compound (1) | | | 0.31 | | | 0.31 | | | 0.31 | | | | |
| (Amount in terms of a metal element (parts by mass) (vs. 100 parts by mass of resin (A)) | (0.12) | (0.12) | (0.12) | (0.12) | (0.12) | (0.12) | (0.12) | (0.12) | (0.12) | (0.12) | (0.12) | | |
| Adhesion evaluation of coating film | 0 | 0 | 0 | 0 | 0 | 0 | 0 | 0 | 0 | 0 | 0 | 2 | 2 |
| Hardness evaluation of coating film | 3H | 3H | 3H | 3H | 3H | 3H | 3H | 3H | 3H | 2H | 2H | H | H |

*: Examples 50, 51, 53, 54 and 56 to 59 not according to the invention

The evaluation results in Table 6, the oily paint comprising the crosslinking agent (B) and the organometallic compound (C) provides the coating film having high adhesion and hardness as compared with the paints not containing the organometallic compound (C) (Comparative Examples 22 and 23). This may be attributed to the excellent crosslinking properties of the resin composition of the invention.

Preparation of Powder Paint

Example 60

100 g of the polyester resin (resin (A-2)), 18.4 g of the polycarbodiimide compound (4) (crosslinking agent (B1-4)) (1.2 mol of the carbodiimide group per one mole of the alcoholic hydroxy group of the resin (A-2)), and 3.4 g of the titanium alkoxide compound (organometallic compound (C1-1)) (0.12 parts by mass in terms of titanium (metal) element based on 100 parts by mass of the polyester resin (resin (A-2))) were mixed in a mixer set at 120°C for 5 min. The mixed resin was coarsely pulverized in a mortar and then pulverized in a planetary type ball mill ("P-7" manufactured by Fritsch, silicon nitride vessel, silicon nitride balls having a diameter of 5 mm) at a rotation rate of 650 rpm for 50 min to obtain a powder paint having a volume average particle size of 22 μm.

Examples 61 to 70 (Examples 61 to 65 and 67 to 70 not according to the invention) and Comparative Examples 24 and 25

Each of powder paints was obtained in the same manner as in Example 60 except for changing the formulation as shown in Table 7.
In Example 65, 1 g of the tertiary amine compound (TEDA) (0.1 parts by mass based on 100 parts by mass of the polyester resin (resin (A-2)) was added together with the tin oxide compound (organometallic compound (C7-1)).
The powder paints of Comparative Examples 24 and 25 do not contain the organometallic compound (C).

Evaluation of Powder Paint

Each of the powder paints prepared in Examples and Comparative Examples was charged in a fluidizing tank and an aluminum sheet preheated at 180°C (standard specimen "Q-PANEL AL-46" manufactured by Sanyo Trading Co., Ltd., 102 mm × 305 mm, thickness: 640 μm) was dipped in the fluidizing tank and then taken out and baked at 180°C (reaction temperature) for 30 min to obtain each coating film sample prepared by a fluidized bed coating.
The coating film sample was subjected to a hot water adhesion evaluation test as shown below and also subjected to hardness evaluation by the pencil scratch hardness test.
The evaluation results are collectively shown in Table 7.

Hot Water Adhesion Evaluation Test

The coating film sample was dipped in boiled ion-exchanged water for 30 min and taken out and dried in a dryer at 80°C for one hour.
The dried coating film sample was evaluated for the adhesion in the same manner as mentioned above with respect to the cross-cut test for the evaluation of oily paint.

Pencil Scratch Hardness Test

Each of the coating film samples was evaluated for the hardness in the same manner as mentioned above with respect to the pencil scratch hardness test for the evaluation of oily paint.

Table 7

| Formulation (g) | Examples | | | | | | | | | | | Comparative Examples | |
|---|---|---|---|---|---|---|---|---|---|---|---|---|---|
| | 60 | 61* | 62* | 63* | 64* | 65* | 66 | 67* | 68* | 69* | 70* | 24 | 25 |
| Resin (A) | | | | | | | | | | | | | |
| (A-2) Polyester resin | 100 | 100 | 100 | 100 | 100 | 100 | 100 | 100 | 100 | 100 | 100 | 100 | 100 |
| Crosslinking agent (B) | | | | | | | | | | | | | |
| (B1-4) Polycarbodiimide compound (4) (solid component: 100% by mass) | 18.4 | 18.4 | 18.4 | 18.4 | 18.4 | 18.4 | | | | 9.2 | 36.8 | 18.4 | |
| (B1-6) Polycarbodiimide compound (6) (solid component: 100% by mass) | | | | | | | 15.9 | 15.9 | 15.9 | | | | 15.9 |
| (Carbodiimide group (mol) (vs. one mole of alcoholic hydroxy group of resin (A) ) | (1.2) | (1.2) | (1.2) | (1.2) | (1.2) | (1.2) | (1.2) | (1.2) | (1.2) | (0.5) | (2.0) | (1.0) | (1.0) |
| Organometallic compound (C) | | | | | | | | | | | | | |
| (C1-1) Titanium alkoxide compound | 3.4 | | | | | | 3.4 | | | | | | |
| (C5-5) Zinc carboxylate compound (1) | | 1 | | | | | | 1 | | 1 | 1 | | |
| (C6-1) Tin carboxylate compound (1) | | | 0.53 | | | | | | 0.53 | | | | |
| (C6-2) Tin carboxylate compound (2) | | | | 0.1 | | | | | | | | | |
| (C7-1) Tin oxide compound | | | | | 0.1 | 0.1 | | | | | | | |
| (Amount in terms of metal element (parts by mass) (vs. 100 parts by mass of resin (A)) | (0.1) | (0.1) | (0.1) | (0.026) | (0.033) | (0.033) | (0.1) | (0.1) | (0.1) | (0.1) | (0.1) | | |
| Tertiary amine (TEDA) | | | | | | 0.1 | | | | | | | |
| Hot water adhesion evaluation of coating film | 0 | 0 | 0 | 0 | 1 | 1 | 0 | 0 | 0 | 1 | 1 | 5 | 5 |
| Hardness evaluation of coating film | HB | HB | HB | HB | HB | F | HB | HB | HB | B | B | 2B | 2B |

*: Examples 61 to 65 and 67 to 70 not according to the invention

The evaluation results in Table 7 show that the powder paint comprising the crosslinking agent (B) and the organometallic compound (C) provides the coating film having high adhesion and hardness, as compared with the powder paints not containing the organometallic compound (C) (Comparative Examples 24 and 25). This may be attributed to the excellent crosslinking properties of the resin composition of the invention.

Preparation of Resin Molded Body

Example 71

In a 500-mL four-necked flask, 100 g of the phenoxy resin (1) (resin (A-5)) and 100 g of 2-butanone solvent were charged and mixed under stirring with a stirrer for one hour. Thereafter, 159.0 g of the polycarbodiimide compound (1) (crosslinking agent (B1-1)) (1.0 mol of the carbodiimide group per one mole of the alcoholic hydroxy group of the resin (A-5)) and 4.0 g of the titanium alkoxide compound (organometallic compound (C1-1)) (0.12 parts by mass in terms of titanium (metal) element based on 100 parts by mass of the acrylic resin (resin (A-6))) were charged and the contents were further mixed under stirring for one hour to obtain a resin material.
In a glass petri dish, the resin material and a carbon cloth (manufactured by NGK Spark Plug Co., Ltd., carbon fibers) were charged and allowed to stand for 3 min. Then, the carbon cloth was taken out, drained with a glass rod, and dried at 25°C for one hour and further dried at 150°C for 5 min to obtain a prepreg.
The obtained prepreg was cured using a vacuum press machine set at 200°C (reaction temperature) for one hour to obtain a resin molded article of a carbon fiber composite material (100 mm × 100 mm × 0.4 mm). The resin component (component other than the carbon fibers) in the resin molded article was about 55% by mass.

Examples 72 to 81 (Examples 72, 73, 75, 76 and 78 to 81 not according to the invention) and Comparative Examples 26 and 27

Each of resin molded articles was obtained in the same manner as in Example 71 except for changing the formulation as shown in Table 8.
The resin molded articles of Comparative Examples 26 and 27 did not contain the organometallic compound (C).

Evaluation of Resin Molded Article

Each of the resin molded articles prepared in Examples and Comparative Examples was evaluated for heat resistance and mechanical strength characteristics. As shown below, a glass transition temperature was measured as an index for the heat resistance evaluation, and a tensile elasticity was measured as an index for the evaluation for mechanical strength characteristics.
The evaluation results are collectively shown in Table 8.

Measurement of Glass Transition Temperature

The glass transition temperature was measured by the tan $\delta$ method using a dynamic viscoelasticity measuring device ("DMS 6100" manufactured by Seiko Instruments Inc.; frequency: 10 Hz, temperature: 20 to 250°C, temperature rise rate: 10°C/min). The higher the glass transition temperature is, the more excellent the heat resistance is.

Measurement of Tensile Elasticity

From a tensile stress measured on a specimen (4 mm × 20 mm × 0.4 mm in thickness) by using a thermomechanical analyzer ("TMASS-6100" manufactured by Seiko Instruments Inc.; tensile load: 9.8 to 5,000 mN, load speed: 250 mN/min, temperature: 25°C), a tensile elasticity E (GPa) was determined according to the following equation. The larger the value of the tensile elasticity is, the more excellent the mechanical strength characteristics are.

$$E = (\sigma 2 - \sigma 1)/(\varepsilon 2 - \varepsilon 1)$$

$\sigma 1$: Tensile stress at a strain $\varepsilon 1 = 0.0005$
$\sigma 2$: Tensile stress at a strain $\varepsilon 2 = 0.0025$

Table 8

| Formulation (g) | Examples 71 | 72* | 73* | 74 | 75* | 76* | 77 | 78* | 79* | 80* | 81* | Comparative Examples 26 | 27 |
|---|---|---|---|---|---|---|---|---|---|---|---|---|---|
| Resin (A) | | | | | | | | | | | | | |
| (A-5) Phenoxy resin (1) (solid component: 100% by mass) | 100 | 100 | 100 | 100 | 100 | 100 | 100 | 100 | 100 | 100 | 100 | 100 | 100 |
| Solvent: 2-Butanone | 100 | 100 | 100 | 100 | 100 | 100 | 100 | 100 | 100 | 100 | 100 | 100 | 100 |
| Crosslinking agent (B) | | | | | | | | | | | | | |
| (B1-1) Polycarbodiimide compound (1) (solid component: 50% by mass) | 159.0 | 159.0 | 159.0 | | | | | | | 79.5 | 318.0 | 80.0 | |
| (B1-2) Polycarbodiimide compound (2) (solid component: 30% by mass) | | | | 252.0 | 252.0 | 252.0 | | | | | | | 76.0 |
| (B1-5) Polycarbodiimide compound (5) (solid component: 50% by mass) | | | | | | | 136.0 | 136.0 | 136.0 | | | | |
| (Carbodiimide group (mol) (vs. one mole of alcoholic hydroxy group of resin (A)) | (1.0) | (1.0) | (1.0) | (1.0) | (1.0) | (1.0) | (1.0) | (1.0) | (1.0) | (0.5) | (2.0) | (1.0) | (1.0) |
| Organometallic compound (C) | | | | | | | | | | | | | |
| (C1-1) Titanium alkoxide compound | 4.0 | | | 4.0 | | | 4.0 | | | | | | |
| (C5-5) Zinc carboxylate compound (1) | | 1.17 | | | 1.17 | | | 1.17 | | 1.17 | 1.17 | | |
| (C6-1) Tin carboxylate compound (1) | | | 0.64 | | | 0.64 | | | 0.64 | | | | |
| (Amount in terms of a metal element (parts by mass) (vs. 100 parts by mass of resin (A)) | (0.12) | (0.12) | (0.12) | (0.12) | (0.12) | (0.12) | (0.12) | (0.12) | (0.12) | (0.12) | (0.12) | | |
| Glass transition temperature of resin molded article (°C) | 158 | 159 | 154 | 195 | 193 | 192 | 155 | 158 | 154 | 130 | 125 | 25 | 26 |
| Tensile elasticity of resin molded article (GPa) | 16 | 19 | 16 | 22 | 21 | 20 | 16 | 15 | 17 | 12 | 12 | 0.9 | 1 |

*: Examples 72, 73, 75, 76 and 78 to 81 not according to the invention

The evaluation results in Table 8 show that the material for resin molded article comprising the crosslinking agent (B) and the organometallic compound (C) provided the resin molded article having excellent heat resistance and mechanical strength characteristics, as compared with the case in which the organometallic compound (C) is not added (Comparative Examples 26 and 27). This is attributed to the excellent crosslinking properties of the resin composition of the invention.

Preparation of Electrical Insulating Material

Example 82

In a 500-mL four-necked flask, 100 g of the phenoxy resin (2) (resin (A-6)) and 100 g of 2-butanone solvent were charged and mixed under stirring by a stirrer for one hour. Thereafter, 159.0 g of the polycarbodiimide compound (1) (crosslinking agent (B1-1)) (1.0 mol of the carbodiimide group per one mole of the alcoholic hydroxy group of the resin (A-6)) and 4.0 g of the titanium alkoxide compound (organometallic compound (C1-1)) (0.12 parts by mass in terms of titanium (metal) element based on 100 parts by mass of the acrylic resin (resin (A-6))) were charged and the contents were further mixed under stirring for one hour to obtain a resin material.
In a glass petri dish, the resin material and a glass cloth (manufactured by Nitto Boseki Co., Ltd., glass cloth #2116 for electronic material, thickness: 95 μm) were charged and allowed to stand for 5 min. Then, the glass cloth was taken out, drained with a glass rod, and dried at 25°C for one hour and further dried at 150°C for 5 min to obtain a prepreg.
The obtained prepreg was sandwiched by two sheets of copper foil ("GTS-MP" manufactured by Furukawa Electric Co., Ltd., thickness: 35 μm) with the roughened surfaces positioned inward and then cured using a vacuum press machine set at 200°C (reaction temperature) for one hour to obtain a laminate composed of the copper foil and the electrical insulating material of the glass fiber composite material (100 mm × 100 mm × 0.2 mm). The resin component (component other than the glass cloth) in the glass fiber composite material was about 40% by mass.

Examples 83 to 92 (Examples 83, 84, 86, 87 and 89 to 92 not according to the invention) and Comparative Examples 28 and 29

Each of resin molded articles was obtained in the same manner as in Example 82 except for changing the formulation as shown in Table 9.
The resin molded articles of Comparative Examples 28 and 29 did not contain the organometallic compound (C).

Evaluation of Electrical Insulating Material

The electrical insulating material in each laminate prepared in Examples and Comparative Examples was evaluated for heat resistance, water absorbency, and adhesive strength. As shown below, a glass transition temperature was measured as an index for the heat resistance evaluation. In addition, the water absorbency evaluation was performed by measuring a water absorption and the adhesive strength evaluation was performed by a copper foil delamination test.
The evaluation results are collectively shown in Table 9.

Measurement of Glass Transition Temperature

The copper foils were delaminated from the laminate to take out the electrical insulating material. The glass transition temperature was measured in the same manner as in the measurement of the glass transition temperature in the evaluation of resin molded article.

Measurement of Water Absorption

The copper foils were delaminated from the laminate to take out the electrical insulating material to prepare a specimen (30 mm × 30 mm). The weighed specimen was allowed to stand in distilled water in a beaker at 24°C for 24 h. After wiping off the water on the surface of the specimen, the weight of the specimen was measured. The rate of weight increase before and after allowing to stand in water was calculated to obtain the water absorption. The smaller the value of the water absorption is, the lower the water absorbency is.

Copper Foil Delamination Test

The copper foil of the laminate was notched in a width of 10 mm by using a cutter. One end of the copper foil having a width of 10 mm in the notched portion was slightly delaminated and the tip thereof was gripped with a gripper and pulled to

measure the delamination strength of the copper foil by using a table-top precision universal tester ("AGS-X" manufactured by Shimadzu Corporation). The larger the delamination strength is, the higher the adhesive strength of the electrical insulating material to the copper foil is.

Table 9

| Formulation (g) | Examples | | | | | | | | | | | Comparative Examples | |
|---|---|---|---|---|---|---|---|---|---|---|---|---|---|
| | 82 | 83 * | 84 * | 85 | 86 * | 87 * | 88 | 89 * | 90 * | 91 * | 92 * | 28 | 29 |
| Resin (A) | | | | | | | | | | | | | |
| (A-6) Phenoxy resin (2) (solid component: 100% by mass) | 100 | 100 | 100 | 100 | 100 | 100 | 100 | 100 | 100 | 100 | 100 | 100 | 100 |
| Solvent: 2-Butanone | 100 | 100 | 100 | 100 | 100 | 100 | 100 | 100 | 100 | 100 | 100 | 100 | 100 |
| Crosslinking agent (B) | | | | | | | | | | | | | |
| (B1-1) Polycarbodiimide compound (1) (solid component: 50% by mass) | 159.0 | 159.0 | 159.0 | | | | | | | 79.5 | 318.0 | 80.0 | |
| (B1-2) Polycarbodiimide compound (2) (solid component: 30% by mass) | | | | 252.0 | 252.0 | 252.0 | | | | | | | 76.0 |
| (B1-5) Polycarbodiimide compound (5) (solid component: 50% by mass) | | | | | | | 136.0 | 136.0 | 136.0 | | | | |
| (Carbodiimide group (mol) (vs. one mole of alcoholic hydroxy group of resin (A)) | (1.0) | (1.0) | (1.0) | (1.0) | (1.0) | (1.0) | (1.0) | (1.0) | (1.0) | (0.5) | (2.0) | (1.0) | (1.0) |
| Organometallic compound (C) | | | | | | | | | | | | | |
| (C1-1) Titanium alkoxide compound | 4.0 | | | 4.0 | | | 4.0 | | | | | | |
| (C5-5) Zinc carboxylate compound (1) | | 1.17 | | | 1.17 | | | 1.17 | | 1.17 | 1.17 | | |
| (C6-1) Tin carboxylate compound (1) | | | 0.64 | | | 0.64 | | | 0.64 | | | | |
| (Amount in terms of metal element (parts by mass) (vs. 100 parts by mass of resin (A)) | (0.12) | (0.12) | (0.12) | (0.12) | (0.12) | (0.12) | (0.12) | (0.12) | (0.12) | (0.12) | (0.12) | | |
| Glass transition temperature of electrical insulating material (°C) | 157 | 158 | 157 | 194 | 194 | 193 | 160 | 169 | 159 | 125 | 125 | 25 | 29 |
| Water absorption of electrical insulating material (%) | 0.12 | 0.11 | 0.11 | 0.11 | 0.11 | 0.13 | 0.14 | 0.15 | 0.15 | 0.13 | 0.12 | 0.45 | 0.40 |
| Delamination strength of copper foil (kgf/cm) | 2.5 | 2.7 | 2.5 | 2.9 | 2.8 | 2.8 | 2.4 | 2.5 | 2.5 | 2.4 | 2.4 | 1.0 | 1.1 |

*: Examples 83, 84, 86, 87 and 89 to 92 not according to the invention

The evaluation results in Table 9 show that the electrical insulating material comprising the crosslinking agent (B) and the organometallic compound (C) has excellent heat resistance, low water absorbency, and high adhesive strength, as compared with the case in which the organometallic compound (C) is not added (Comparative Examples 28 and 29). It may be attributed to the excellent crosslinking properties of the resin composition of the invention.

## Claims

1. A resin composition comprising:

   at least one resin (A) that comprises at least one selected from an alcoholic hydroxy group and a carboxy group;
   at least one crosslinking agent (B) selected from a polycarbodiimide compound; and
   an organometallic compound (C), wherein the organometallic compound (C) is at least one selected from (C1) an alkoxide compound of titanium, zirconium, or aluminum;
   wherein the organometallic compound (C1) is an alkoxide compound represented by any of formulae (1-1) to (1-3):

   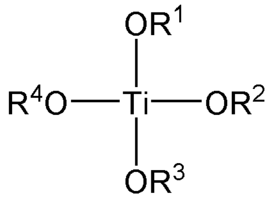
   (1-1)

   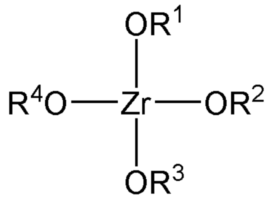
   (1-2)

   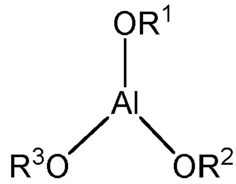
   (1-3)

   wherein $R^1$ to $R^4$ are each independently a hydrogen atom, an alkyl group having 1 to 20 carbon atoms, or an organic group Y, and at least one among $R^1$ to $R^4$ are Y, wherein the organic group Y is a residue after removing a hydroxy group from a polyalkylene glycol monohydrocarbyl ether represented by formula (1a):

   $$R^{11}(OCHR^{12}CH_2)_nOH \qquad (1a)$$

   wherein $R^{11}$ is an alkyl group having 1 to 4 carbon atoms or a phenyl group, $R^{12}$ is a hydrogen atom or an alkyl group having 1 to 4 carbon atoms, and n is an integer of 4 to 45; and
   when two or more selected from $R^1$ to $R^4$ in formula (1-1) or (1-2), or two or more selected from $R^1$ to $R^3$ in formula (1-3) are the organic groups Y, $R^{11}$'s, $R^{12}$'s, and n's may be the same or different, respectively.

2. The resin composition according to claim 1, wherein the resin composition comprises a tertiary amine compound.

3. The resin composition according to any one of claims 1 or 2, wherein the resin (A) is at least one selected from a polyester resin, an acrylic resin, a polyurethane resin, an epoxy resin, a styrene-acrylic resin, and a fluorine resin.

4. A resin material comprising the resin composition according to any one of claims 1 to 3, wherein the resin material is one selected from a paint, an ink, an electronic material, an adhesive, a plastic molding material, and a fiber-reinforced plastic material.

5. A resin crosslinked body that is a reaction product of the resin composition according to any one of claims 1 to 3, wherein the crosslinking agent (B) comprises a polycarbodiimide compound and the reaction product has at least one bond selected from an isourea bond, a urea bond, and a N-acylurea bond.

## Patentansprüche

1. Harzzusammensetzung, umfassend:

   zumindest ein Harz (A), das zumindest eine Gruppe ausgewählt aus einer alkoholischen Hydroxygruppe und einer Carboxylgruppe umfasst;

zumindest ein Vernetzungsmittel (B), das aus einer Polycarbodiimid-Verbindung ausgewählt ist; und
eine metallorganische Verbindung (C), wobei die metallorganische Verbindung (C) zumindest eine ist, die aus (C1) einer Alkoxidverbindung von Titan, Zirkonium oder Aluminium ausgewählt ist;
wobei die metallorganische Verbindung (C1) eine Alkoxidverbindung ist, die durch eine der Formeln (1-1) bis (1-3) dargestellt wird:

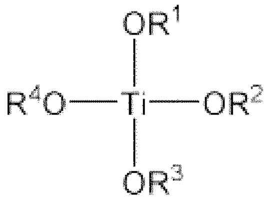

(1-1)

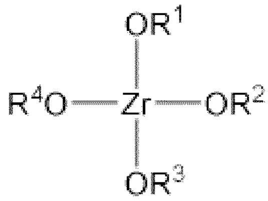

(1-2)

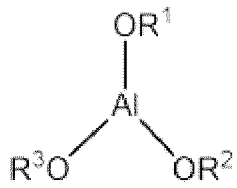

(1-3)

wobei $R^1$ bis $R^4$ jeweils unabhängig ein Wasserstoffatom, eine Alkylgruppe mit 1 bis 20 Kohlenstoffatomen oder eine organische Gruppe Y sind, und zumindest eines von $R^1$ bis $R^4$ Y ist, wobei die organische Gruppe Y ein Rest nach Entfernen einer Hydroxygruppe von einem Polyalkylenglykol-Monohydrocarbyl-Ether ist, der durch Formel (1a) dargestellt wird:

$$R^{11}(OCHR^{12}CH_2)_nOH \qquad (1a)$$

wobei $R^{11}$ eine Alkylgruppe mit 1 bis 4 Kohlenstoffatomen oder eine Phenylgruppe ist, $R^{12}$ ein Wasserstoffatom oder eine Alkylgruppe mit 1 bis 4 Kohlenstoffatomen ist, und n eine ganze Zahl von 4 bis 45 ist; und
wenn zwei oder mehr ausgewählt aus $R^1$ bis $R^4$ in Formel (1-1) oder (1-2), oder zwei oder mehr ausgewählt aus $R^1$ bis $R^3$ in Formel (1-3) die organischen Gruppen Y sind, die $R^{11}$, $R^{12}$ und n jeweils gleich oder verschieden sein können.

2. Harzzusammensetzung nach Anspruch 1, wobei die Harzzusammensetzung eine tertiäre Amin-Verbindung umfasst.

3. Harzzusammensetzung nach einem der Ansprüche 1 oder 2, wobei das Harz (A) zumindest eines ausgewählt aus einem Polyesterharz, einem Acrylharz, einem Polyurethanharz, einem Epoxidharz, einem Styrol-Acrylharz und einem Fluorharz ist.

4. Harzmaterial, umfassend die Harzzusammensetzung nach einem der Ansprüche 1 bis 3, wobei das Harzmaterial aus einem Anstrichstoff, einer Tinte, einem elektronischen Material, einem Klebstoff, einem Kunststoffformmaterial und einem faserverstärkten Kunststoffmaterial ausgewählt ist.

5. Vernetzter Harzkörper, der ein Reaktionsprodukt der Harzzusammensetzung nach einem der Ansprüche 1 bis 3 ist, wobei das Vernetzungsmittel (B) eine Polycarbodiimid-Verbindung umfasst und das Reaktionsprodukt zumindest eine Bindung aufweist, die aus einer Isoharnstoff-Bindung, einer Harnstoff-Bindung und einer N-Acylharnstoff-Bindung ausgewählt ist.

## Revendications

1. Composition de résine, comprenant :

au moins une résine (A) qui comprend au moins un groupe choisi parmi un groupe hydroxy alcoolique et un groupe carboxy ;
au moins un agent réticulant (B) choisi parmi un composé polycarbodiimide ; et
un composé organométallique (C), le composé organométallique (C) étant au moins un composé choisi parmi (C1) un composé alcoxyde de titane, de zirconium ou d'aluminium ;
le composé organométallique (C1) étant un composé alcoxyde représenté par l'une des formules (1-1) à (1-3) :

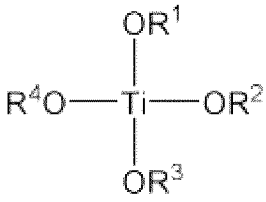

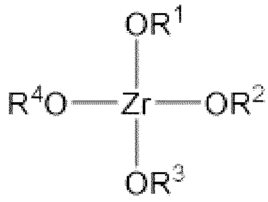

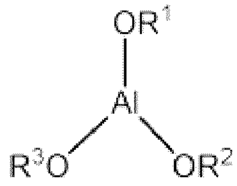

(1-1) (1-2) (1-3)

où $R^1$ à $R^4$ sont indépendamment un atome d'hydrogène, un groupe alkyle avec 1 à 20 atomes de carbone, ou un groupe organique Y, et au moins un parmi $R^1$ à $R^4$ est Y, le groupe organique Y étant un résidu après élimination d'un groupe hydroxy d'un éther monohydrocarbyle de polyalkylène glycol représenté par la formule (1a) :

$$R^{11}(OCHR^{12}CH_2)_nOH \qquad (1a)$$

où $R^{11}$ est un groupe alkyle ayant 1 à 4 atomes de carbone ou un groupe phényle, $R^{12}$ est un atome d'hydrogène ou un groupe alkyle ayant 1 à 4 atomes de carbone, et n est un nombre entier de 4 à 45 ; et lorsque deux ou plus de $R^1$ à $R^4$ dans la formule (1-1) ou (1-2), ou deux ou plus de $R^1$ à $R^3$ dans la formule (1-3) sont les groupes organiques Y, les $R^{11}$, les $R^{12}$ et les n peuvent être identiques ou différents, respectivement.

**2.** Composition de résine selon la revendication 1, la composition de résine comprenant un composé d'amine tertiaire.

**3.** Composition de résine selon l'une quelconque des revendications 1 ou 2, dans laquelle la résine (A) est au moins une résine choisie parmi une résine polyester, une résine acrylique, une résine polyuréthane, une résine époxy, une résine styrène-acrylique et une résine fluorée.

**4.** Matériau de résine comprenant la composition de résine selon l'une quelconque des revendications 1 à 3, le matériau de résine étant choisi parmi une peinture, une encre, un matériau électronique, un adhésif, un matériau plastique de moulage et un matériau plastique renforcé par des fibres.

**5.** Corps réticulé de résine qui est un produit de réaction de la composition de résine selon l'une quelconque des revendications 1 à 3, dans lequel l'agent de réticulation (B) comprend un composé polycarbodiimide et le produit de réaction présente au moins une liaison choisie parmi une liaison isourée, une liaison urée et une liaison N-acylurée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9221532 A
- JP 9216931 A
- JP 2015163669 A
- JP 2017031301 A
- JP 5457611 B